# EUROPÄISCHE PATENTSCHRIFT

(11) **EP 3 525 294 B1**
(45) Veröffentlichungstag und Bekanntmachung des Hinweises auf die Patenterteilung: **27.07.2022**
(21) Anmeldenummer: 19155152.2
(22) Anmeldetag: 01.02.2019
(51) Int. Cl.: H01R 13/52

(54) **STECKKONTAKTANORDNUNG**
CONNECTOR CONTACT ASSEMBLY
SYSTÈME DE CONTACT ENFICHABLE

(30) Priorität: 09.02.2018 DE 102018103015
(43) Veröffentlichungstag der Anmeldung: 14.08.2019
(73) Patentinhaber: Stabilus GmbH, 56070 Koblenz (DE)
(72) Erfinder: Keßler, Jonathan, 56412 Großholbach (DE); Theis, Christof, 56204 Hillscheid (DE); Bochen, Marian, 56337 Eitelborn (DE); Bochen, Jan, 56337 Eitelborn (DE); Jost, Eduard, 56206 Hilgert (DE); Knopp, Axel, 56337 Eitelborn (DE)
(74) Vertreter: Klein, Thomas

(56) Entgegenhaltungen:
- DE-A1-102014 100 142
- DE-B3-102014 118 379
- JP-A- 2015 177 700
- JP-A- 2017 005 999
- US-A- 3 350 587

## Beschreibung

Die Erfindung bezieht sich auf eine Steckkontaktanordnung für eine elektromotorische Linearstellvorrichtung, mit einem Endverschluß, durch den ein Gehäuse verschlossenen ist, **in dem die elektromotorische Linearstellvorrichtung** angeordnet ist, mit einem ein oder mehrere Steckkontakte aufweisenden Stecker an einem Ende eines oder mehrerer von außen zu dem Gehäuse geführter Kabel, die in entsprechende am Endverschluß angeordnete Steckbuchsen einsteckbar sind.

Eine Steckkontaktanordnung der eingangs genannten Art ist aus der DE 10 2014 118 379 B3 bekannt.

Bei derartigen Steckkontaktanordnungen besteht das Problem, daß von dem außerhalb des Gehäuses befindlichen Kabel eine abgedichtete Verbindung zu der in dem Gehäuse befindlichen elektromotorischen Linearstellvorrichtung bestehen muß.

Aus der JP 2017 00 5999 A ist eine Kabeldurchführanordnung bekannt, die ein Gehäuse aufweist, das durch einen Endverschluß verschlossen ist.

In einer Stufenöffnung des Endverschlusses ist ein innerer Verbinder angeordnet, in dem in den Innenraum des Gehäuses gerichtete Aufnahmeöffnungen zur Aufnahme von Kabeln ausgebildet sind, wobei in die nach außen gerichteten Bereichen der Aufnahmeöffnungen die Enden eines nach außen führenden Kabels ragen, die mit den Enden des nach innen führenden Kabels leitend verbunden sind. Das nach außen führende Kabel ist von einer Kabeltülle umschlossen, deren gehäuseseitiges Ende zwischen radial nach innen federnden Federelementen des Endverschlusses und zwei diesen gegenüberliegenden gegenüberliegenden radial federnden Federarmen des inneren Verbinders eingeklemmt sind.

Aufgabe der Erfindung ist es daher eine Steckkontaktanordnung der eingangs genannten Art zu schaffen, die bei einfachem Aufbau und einfacher Montage ein abgedichtetes Kontaktieren der Steckkontaktverbindung sowie eine Beurteilung der Dichtstelle von außen ermöglicht.

Diese Aufgabe wird erfindungsgemäß durch den Gegenstand des Anspruchs 1 gelöst, wobei in dem Endverschluß eine von außen in den Gehäuseinnenraum führende, als Stufenöffnung ausgebildete Einführöffnung ausgebildet ist, die an ihrem dem Gehäuseinnenraum nahen Bereich eine kleine Stufe mit geringerer radialer Erstreckung und in ihrem nach außen mündenden Bereich eine große Stufe mit größerer radialer Erstreckung aufweist, mit einem Steckerelement, das in seiner Einbaulage mit einem axialen Zapfenstück durch die kleine Stufe der Stufenöffnung in den Gehäuseinnenraum ragt und mit einem axialen Haltebereich in die große Stufe der Stufenöffnung ragt, in das die Kabel führen und das von außen bis in eine Einbaulage in die Stufenöffnung einführbar und in der Einbaulage fixierbar ist und aus deren dem Gehäuseinnenraum zugewandter Stirnseite axial die Steckkontakte hervorragen, mit einem im Gehäuseinnenraum oder dem Inneren des Endverschlusses angeordneten, die Steckbuchsen aufweisenden Buchsenhalteelement, sowie mit einer Kabeltülle, durch die die Kabel von dem Steckerelement nach außen geführt sind und die mit ihrem einem Ende den Haltebereich umschließt und mit elastischer Vorspannung radial umlaufend sowohl an der radial umlaufenden Mantelfläche des Haltebereichs als auch an der radial umlaufenden Innenfläche der großen Stufe der Stufenöffnung in Anlage ist.

Bei dieser Ausbildung werden zunächst die Steckkontakte oder die Steckbuchsen mit dem Steckerelement verbunden. Danach wird die Kabeltülle von der dem Steckerelement entgegengesetzten Seite her über die Kabel geführt, bis sie mit ihrem einen Ende den Haltebereich des Steckerelements umschließt. Nun wird diese vormontierte Einheit in die große Stufe der Stufenöffnung bis in seine Einbaulage eingeführt, in der auch die Steckkontakte mit den Steckbuchsen kontaktiert sind. Dabei kommt es zur elastisch vorgespannten Anlage der Kabeltülle sowohl an der radial umlaufenden Mantelfläche des Haltebereichs des Steckerelements als auch an der Innenfläche der großen Stufe der Stufenöffnung. Damit ist die Kleine Stufe der Stufenöffnung und der Bereich von Steckkontakten und Steckbuchsen nach außen hin abgedichtet.

Die gleiche Ausgestaltung von Stufenöffnung, Steckerelement und Kabeltülle bei ansonsten unterschiedlichen Endverschlüssen ermöglicht kostensparende Gleichteile bei den verschiedensten Linearstellvorrichtungen.

Die Vormontierbarkeit der Baueinheit aus Steckerelement, Steckkontakten bzw. Steckbuchsen sowie Kabel und Kabeltülle erleichtert die Montage wesentlich, da nun nur noch ein Einstecken dieser Baueinheit in die große Stufe der Stufenöffnung erforderlich ist.

Da die Dichtstelle zwischen der Kabeltülle und der Stufenöffnung sich nahe der Mündung der Stufenöffnung nach außen befindet, kann an dieser Mündung der Stufenöffnung einfach kontrolliert werden, ob diese Dichtstelle auch wirklich dicht ist. Durch die Sichtbarkeit einer Undichtheit von außen kommt es auch zu einer Reduzierung von Reklamationskosten.

Vorzugsweise besteht die Kabeltülle aus einem elastischen Werkstoff, so daß keine zusätzlichen Dichtelemente benötigt werden.

Auf zusätzliche Steckerelemente kann verzichtet werden, wenn die Kabeltülle formschlüssig mit dem Steckerelement verbindbar und damit auch eine Montage einfach ist.

Dazu kann der Haltebereich des Steckerelements an seiner radial umlaufenden Mantelfläche eine radial umlaufende Haltenut aufweisen, in die ein radial nach innen ragender Ringansatz der Kabeltülle ragt.

Weist die Kabeltülle an ihrem in die große Stufe der Stufenöffnung ragenden Bereich einen radial umlaufenden, radial hervorragenden Dichtwulst auf, so ist der Bereich des Dichtwulstes besonders elastisch und sorgt für eine erhöhte Dichtwirkung.

Zur einfachen Anordnung des Steckerelements in seine Einbaulage kann der in die große Stufe der Stufenöffnung ragende Haltebereich des Steckerelements eine flanschartige Erweiterung aufweisen, die axial an der Ringfläche am Übergang von der kleinen Stufe zur großen Stufe der Stufenöffnung anliegbar ist.

Ist an dem in den Gehäuseinnenraum ragenden Endbereich des Zapfenstücks des Steckerelements ein widerhakenartiger Sperransatz angeordnet, der bei Einführen des Zapfenstücks in die kleine Stufe der Stufenöffnung an die Mantelfläche des Zapfenstücks anklappbar ist und der in der Einbaulage des Steckerelements elastisch radial nach außen geklappt ist.

Dadurch hintergreift der Sperransatz in der Einbaulage des Steckerelements den gehäuseinnenraumseitigen Mündungsbereich der kleinen Stufe der Stufenöffnung und sichert das Steckerelement gegen ungewolltes Lösen aus seiner Einbaulage. Es ist dann nicht möglich das Steckerelement ausschließlich durch axiale Kraftbeaufschlagung aus der Stufenöffnung herauszuziehen, ohne dabei den Sperransatz abzutrennen. Damit ist das Steckerelement sicher von außen an dem Endverschluß montierbar.

Weist das Steckerelement einen ganz oder teilweise von einem symmetrischen Querschnitt abweichenden Querschnitt auf und weist die Stufenöffnung einen entsprechenden ganz oder teilweise von einem symmetrischen Querschnitt abweichenden Querschnitt auf, so kann das Steckerelement nur in einer bestimmten Ausrichtung an den Endverschluß montiert werden.

Je nach den vorgegebenen Einbauverhältnissen der Linearstellvorrichtung kann die Stufenöffnung sich in einem Winkelbereich zwischen 0° und 90° zur Längsachse der Linearstellvorrichtung erstrecken.

Dies ist von besonderem Vorteil, wenn der Endverschluß ein Anschlußstück aufweist, so daß zur leichteren Montage von Steckerelement und Kabeltülle die Kabeltülle und das Anschlußstück in unterschiedliche Richtungen ausgerichtet werden können.

Das Anschlußstück, das eine Kugelpfanne sein kann, kann in Bezug auf die Ausrichtung der montierten Kabeltülle unter einem Winkel zwischen 90° und 270°, vorzugsweise um einen Winkel von 180° ausgerichtet sein.

Vorzugsweise ist die Linearstellvorrichtung ein Spindeltrieb, dessen Spindelantriebsmotor in dem Gehäuseinnenraum angeordnet und mit dem Kabel kontaktiert ist.

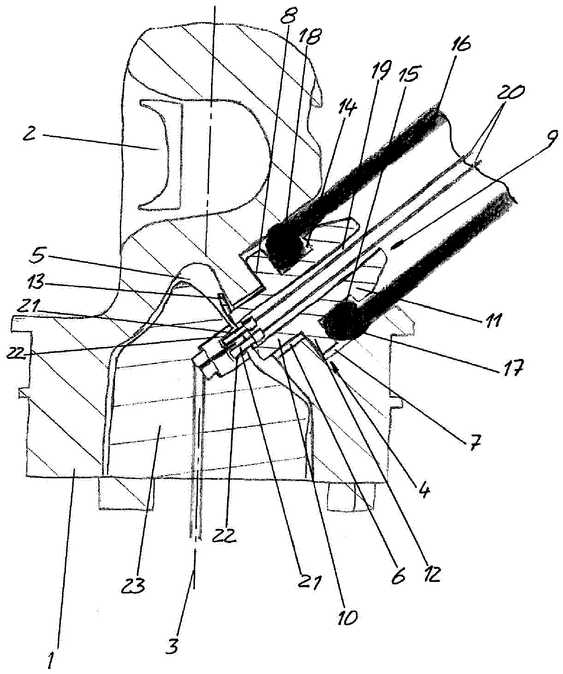

Ein Ausführungsbeispiel der Erfindung ist in der Zeichnung dargestellt und wird im Folgenden näher beschrieben. Die einzige Figur der Zeichnung zeigt eine Steckkontaktanordnung im Längsschnitt.

Die in der Figur dargestellte Steckkontaktanordnung weist einen Endverschluß 1 für ein rohrartiges Gehäuse auf, das ein Bodenstück bildet. In dem nicht dargestellten Gehäuse ist ein Elektromotor für einen eine Linearstellvorrichtung bildenden Spindeltrieb angeordnet.

An dem Endverschluß 1 ist eine ein Anschlußstück 2 bildende Kugelpfanne ausgebildet, die rechtwinklig zur Längsachse 3 des Gehäuses ausgerichtet ist.

Um 180° zur Ausrichtung des Anschlußstücks 2 ausgerichtet und um 45° zur Längsachse 3 geneigt, ist in dem Endverschluß eine Stufenöffnung 4 ausgebildet, die eine in den Gehäuseinnenraum 5 des Gehäuses mündende kleine Stufe 6 geringeren Querschnitts und eine nach außen führende große Stufe 7 größeren Querschnitts aufweist.

Eine sich rechtwinklig zur Längsachse der Stufenöffnung 4 sich erstreckende Ringfläche 8 bildet einen Übergang von der kleinen Stufe 6 zur großen Stufe 7.

In die Stufenöffnung ist ein Steckerelement 9 eingesetzt, das ein die kleine Stufe 6 der Stufenöffnung 4 durchragendes Zapfenstück 10, einen die große Stufe 7 der Stufenöffnung 4 durchragenden Haltebereich 11 und eine flanschartige Erweiterung 12 aufweist, die in der großen Stufe 7 an der Ringfläche 8 des Endverschlusses 1 in Anlage ist.

An dem in den Gehäuseinnenraum 5 ragenden Bereich des Zapfenstücks 10 ist ein widerhakenartiger Sperransatz 13 ausgebildet, der aus seiner radial nach außen geklappten Sperrposition elastisch zum Haltebereich 11 hin klappbar ist. Dies erfolgt bei der Montage des Steckerelements 9, wenn dieses von außen her durch die kleine Stufe 6 der Stufenöffnung 4 hindurch bis in seine Einbaulage geführt wird. Ist der Sperransatz 13 dann vollständig im Gehäuseinnenraum 5 angelangt und die flanschartige Erweiterung 12 an der Ringfläche 8 in Anlage, klappt er aufgrund seiner Elastizität radial nach außen und verhindert eine Demontage des Steckerelements 9.

Anschließend an die flanschartige Erweiterung 12 ist an der radial umlaufenden Mantelfläche des Haltebereichs 11 eine radial umlaufende Haltenut 14 ausgebildet, in die ein Ringansatz 15 an einem Ende einer aus einem elastischen Material bestehenden Kabeltülle 16 hineinragt und mit Vorspannung am Boden der Haltenut 14 in Anlage ist.

Die Kabeltülle 16 weist weiterhin im Bereich des Ringansatzes 15 radial umlaufend nach außen hervorstehend einen Dichtwulst 17 auf, der an der radial umlaufenden Innenwand 18 der großen Stufe 7 mit Vorspannung in Anlage ist.

Durch die Anlage des Ringansatzes 15 mit elastischer Vorspannung an dem Boden der Haltenut 14 sowie die Anlage des Dichtwulstes 17 mit elastischer Vorspannung an der Innenwand 18 der großen Stufe 7 ist das Steckerelement 9 abgedichtet in der Stufenöffnung 4 angeordnet und der Gehäuseinnenraum 5 nach außen hin abgedichtet.

Das Steckerelement 9 weist eine axiale Bohrung 19 auf. Durch die Kabeltülle 16 und die Bohrung 19 im Steckerelement 9 sind ein oder mehrere Kabel 20 dicht von außen bis zum endverschlußseitigen Endbereich des Steckerelements 9 geführt, um dort mit Steckkontakten 21 leitend verbunden zu sein. Die Steckkontakte sind fest mit dem Steckerelement 9 verbunden und ragen aus dem Steckerelement 9 axial heraus.

In der dargestellten Einbaulage sind die Steckkontakte 21 in Steckbuchsen 22 eingeführt, die in einem im Gehäuseinnenraum 5 fest angeordneten Buchsenhalteelement 23 angeordnet sind. Von dem Buchsenhalteelement 23 aus erfolgt eine elektrische Verbindung der Steckbuchsen 22 mit dem nicht dargestellten Elektromotor.

### Bezugszeichenliste

- 1: Endverschluß
- 2: Anschlußstück
- 3: Längsachse
- 4: Stufenöffnung
- 5: Gehäuseinnenraum
- 6: kleine Stufe
- 7: große Stufe
- 8: Ringfläche
- 9: Steckerelement
- 10: Zapfenstück
- 11: Haltebereich
- 12: flanschartige Erweiterung
- 13: Sperransatz
- 14: Haltenut
- 15: Ringansatz
- 16: Kabeltülle
- 17: Dichtwulst
- 18: Innenwand
- 19: Bohrung
- 20: Kabel
- 21: Steckkontakte
- 22: Steckbuchsen
- 23: Buchsenhalteelement

## Patentansprüche

1. Steckkontaktanordnung für eine elektromotorische Linearstellvorrichtung , mit einem Endverschluß (1), durch den ein Gehäuse verschlossenen ist, **in dem die elektromotorische Linearstellvorrichtung** angeordnet ist, mit einem ein oder mehrere Steckkontakte (21) aufweisenden Stecker an einem Ende eines oder mehrerer von außen zu dem Gehäuse geführter Kabel (20), die in entsprechende am Endverschluß (1) angeordnete Steckbuchsen (22) einsteckbar sind, wobei in dem Endverschluß (1) eine von außen in den Gehäuseinnenraum (5) führende, als Stufenöffnung (4) ausgebildete Einführöffnung ausgebildet ist, die an ihrem dem Gehäuseinnenraum (5) nahen Bereich eine kleine Stufe (6) mit geringerer radialer Erstreckung und in ihrem nach außen mündenden Bereich eine große Stufe (7) mit größerer radialer Erstreckung aufweist,
**dadurch gekennzeichnet, dass**
die Steckkontaktanordnung ein Steckerelement (9) aufweist, das in seiner Einbaulage mit einem axialen Zapfenstück (10) durch die kleine Stufe (6) der Stufenöffnung (4) in den Gehäuseinnenraum (5) ragt und mit einem axialen Haltebereich (11) in die große Stufe (7) der Stufenöffnung (4) ragt, in das die Kabel (20) führen und das von außen bis in eine Einbaulage in die Stufenöffnung (4) einführbar und in der Einbaulage fixierbar ist und aus deren dem Gehäuseinnenraum (5) zugewandter Stirnseite axial die Steckkontakte (21) hervorragen,
die Steckkontaktanordnung ein Gehäuseinnenraum (5) oder dem Inneren des Endverschlusses (1) angeordneten, die Steckbuchsen (22) aufweisenden Buchsenhalteelement (23) aufweist,
die Steckkontaktanordnung eine Kabeltülle (16) aufweist, durch die die Kabel (20) von dem Steckerelement (9) nach außen geführt sind und die mit ihrem einem Ende den Haltebereich (11) umschließt und mit elastischer Vorspannung radial umlaufend sowohl an der radial umlaufenden Mantelfläche des Haltebereichs (11) als auch an der radial umlaufenden Innenfläche der großen Stufe (7) der Stufenöffnung (4) in Anlage ist.

2. **Steckkontaktanordnung** nach Anspruch 1, **dadurch gekennzeichnet, daß** die Kabeltülle (16) aus einem elastischen Werkstoff besteht.

3. **Steckkontaktanordnung** nach einem der vorhergehenden Ansprüche, **dadurch gekennzeichnet, daß** die Kabeltülle (16) formschlüssig mit dem Steckerelement (9) verbindbar ist.

4. **Steckkontaktanordnung** nach Anspruch 3, **dadurch gekennzeichnet, daß** der Haltebereich (11) des Steckerelements (9) an seiner radial umlaufenden Mantelfläche eine radial umlaufende Haltenut (14) aufweist, in die ein radial nach innen ragender Ringansatz (15) der Kabeltülle (16) ragt.

5. **Steckkontaktanordnung** nach einem der vorhergehenden Ansprüche, **dadurch gekennzeichnet, daß** die Kabeltülle (16) an ihrem in die große Stufe (7) der Stufenöffnung (4) ragenden Bereich einen radial umlaufenden, radial hervorragenden Dichtwulst (17) aufweist.

6. **Steckkontaktanordnung** nach einem der vorhergehenden Ansprüche, **dadurch gekennzeichnet, daß** der in die große Stufe (7) der Stufenöffnung (4) ragende Haltebereich (11) des Steckerelements (9) eine flanschartige Erweiterung (12) aufweist, die axial an der Ringfläche (8) am Übergang von der kleinen Stufe (6) zur großen Stufe (7) der Stufenöffnung (4) anliegbar ist.

7. **Steckkontaktanordnung** nach einem der vorhergehenden Ansprüche, **dadurch gekennzeichnet, daß** an dem in den Gehäuseinnenraum (5) ragenden Endbereich des Zapfenstücks (10) des Steckerelements (9) ein widerhakenartiger Sperransatz (13) angeordnet ist, der bei Einführen des Zapfenstücks (10) in die kleine Stufe (6) der Stufenöffnung (4) an die Mantelfläche des Zapfenstücks(10) anklappbar ist und der in der Einbaulage des Steckerelements (9) elastisch radial nach außen geklappt ist.

8. **Steckkontaktanordnung** nach einem der vorhergehenden Ansprüche, **dadurch gekennzeichnet, daß** das Verbindungselement einen ganz oder teilweise von einem symmetrischen Querschnitt abweichenden Querschnitt aufweist und die Stufenöffnung einen entsprechenden ganz oder teilweise von einem symmetrischen Querschnitt abweichenden Querschnitt aufweist.

9. **Steckkontaktanordnung** nach einem der vorhergehenden Ansprüche, **dadurch gekennzeichnet, daß** die Stufenöffnung (4) sich in einem Winkelbereich zwischen 0° und 90° zur Längsachse (3) der Linearstellvorrichtung erstreckt.

10. **Steckkontaktanordnung** nach einem der vorhergehenden Ansprüche, **dadurch gekennzeichnet, daß** der Endverschluß (1) ein Anschlußstück (2) aufweist.

11. **Steckkontaktanordnung** nach einem der vorhergehenden Ansprüche, **dadurch gekennzeichnet, daß** die Linearstellvorrichtung ein Spindeltrieb ist, dessen Spindelantriebsmotor in dem Gehäuseinnenraum (5) angeordnet und mit dem Kabel (20) kontaktiert ist.

## Claims

1. Plug contact assembly for an electromotive linear actuation device, having an end closure (1) by way of which a housing in which the electromotive linear actuation device is disposed is closed, having at an end of one or a plurality of cables (20) that are routed from the outside to the housing a plug having one or a plurality of plug contacts (21) that are able to be plugged into corresponding plug sockets (22) disposed on the end closure (1), wherein an introduction opening which as a stepped opening (4) leads from the outside into the housing interior (5) is configured in the end closure (1), said stepped opening (4) on the region thereof proximal to the housing interior (5) having a small step (6) with a minor radial extent, and in the region thereof opening towards the outside having a large step (7) with a large radial extent, **characterized in that** the plug contact assembly has a plug element (9) which, in the installed position thereof, by way of an axial stub part (10) protrudes through the small step (6) of the stepped opening (4) into the housing interior (5) and by way of an axial mounting region (11) protrudes into the large step (7) of the stepped opening (4), the cables (20) being routed into said axial stub part (10) and the latter being able to be introduced from the outside into the stepped opening (4) up to an installed position and being able to be fixed in the installed position, and the plug contacts (21) protruding axially from the end side of said axial stub part (10) that faces the housing interior (5),
the plug contact assembly having a socket mounting element (23) which comprises the plug sockets (22) and is disposed in the housing interior (5) or the interior of the end closure (1),
the plug contact assembly having a cable grommet (16), the cables (20) from the plug element (9) being routed through said cable grommet (16) to the outside and the latter by way of the one end thereof enclosing the mounting region (11) and by way of elastic pre-tensioning bearing in a radially encircling manner on the radially encircling shell face of the mounting region (11) as well as on the radially encircling internal face of the large step (7) of the stepped opening (4).

2. Plug contact assembly according to Claim 1, **characterized in that** the cable grommet (16) is composed of an elastic material.

3. Plug contact assembly according to one of the preceding claims, **characterized in that** the cable grommet (16) is able to be connected to the plug element (9) in a form-fitting manner.

4. Plug contact assembly according to Claim 3, **characterized in that** the mounting region (11) of the plug element (9) on the radially encircling shell face thereof has a radially encircling mounting groove (14), a radially inward-protruding annular appendage (15) of the cable grommet (16) protruding into said mounting groove (14).

5. Plug contact assembly according to one of the preceding claims, **characterized in that** the cable grommet (16), on the region thereof that protrudes into the large step (7) of the stepped opening (4), has a radially encircling, radially protruding sealing bead (17).

6. Plug contact assembly according to one of the preceding claims, **characterized in that** the mounting region (11) of the plug element (9) that protrudes into the large step (7) of the stepped opening (4) has a flange-type extension (12) which is able to be brought to bear axially on the annular face (8) at the transition from the small step (6) to the large step (7) of the stepped opening (4).

7. Plug contact assembly according to one of the preceding claims, **characterized in that** a barb-type blocking appendage (13) is disposed on the end region of the stub part (10) of the plug element (9) that protrudes into the housing interior (5), said barb-type blocking appendage (13), when inserting the stub part (10) into the small step (6) of the stepped opening (4), being able to swing against the shell face of the stub part (10), and in the installed position of the plug element (9) in an elastic manner being swung radially outward.

8. Plug contact assembly according to one of the preceding claims, **characterized in that** the connection element has a cross section that deviates completely or partially from a symmetrical cross section, and the stepped opening has a corresponding cross section that deviates completely or partially from a symmetrical cross section.

9. Plug contact assembly according to one of the preceding claims, **characterized in that** the stepped opening (4) in relation to the longitudinal axis (3) of the linear actuation device extends in an angular range between 0° and 90°.

10. Plug contact assembly according to one of the preceding claims, **characterized in that** the end closure (1) has a connector piece (2).

11. Plug contact assembly according to one of the preceding claims, **characterized in that** the linear actuation device is a spindle mechanism of which the spindle drive motor is disposed in the housing interior (5) and is contacted by the cable (20).

## Revendications

1. Système de contact enfichable pour un dispositif de réglage linéaire électromotorisé, comportant une fermeture d'extrémité (1), au moyen de laquelle un boîtier est fermé, boîtier dans lequel le dispositif de réglage linéaire électromotorisé est disposé, comportant un connecteur présentant un ou plusieurs contacts enfichables (21) à une extrémité d'un ou plusieurs câbles (20) guidés depuis l'extérieur jusqu'au boîtier, lesquels câbles peuvent être enfichés dans des douilles d'enfichage (22) correspondantes disposées sur la fermeture d'extrémité (1), une ouverture d'introduction réalisée sous forme d'ouverture étagée (4), menant depuis l'extérieur dans l'espace intérieur de boîtier (5), étant réalisée dans la fermeture d'extrémité (1), laquelle ouverture présente, au niveau de sa région proche de l'espace intérieur de boîtier (5), un petit étage (6) doté d'une plus petite étendue radiale et, dans sa région débouchant vers l'extérieur, un grand étage (7) doté d'une plus grande étendue radiale, **caractérisé en ce que** le système de contact enfichable présente un élément de connecteur (9) qui, dans sa position d'installation, fait saillie par une pièce formant tourillon axiale (10) à travers le petit étage (6) de l'ouverture étagée (4) dans l'espace intérieur de boîtier (5) et fait saillie par une région de retenue axiale (11) dans le grand étage (7) de l'ouverture étagée (4), région de retenue dans laquelle les câbles (20) mènent et laquelle peut être introduite depuis l'extérieur jusque dans une position d'installation dans l'ouverture étagée (4) et peut être fixée dans la position d'installation et hors du côté frontal, tourné vers l'espace intérieur de boîtier (5), de laquelle les contacts enfichables (21) font saillie axialement, le système de contact enfichable présente un élément de retenue de douille (23) disposé dans l'espace intérieur de boîtier (5) ou l'intérieur de la fermeture d'extrémité (1), et présentant les douilles d'enfichage (22), le système de contact enfichable présente une gaine de câbles (16) à travers laquelle les câbles (20) sont guidés vers l'extérieur à partir de l'élément de connecteur (9) et qui entoure, par l'une de ses extrémités, la région de retenue (11) et est en appui, avec précontrainte élastique, radialement de manière périphérique à la fois contre la surface d'enveloppe radialement périphérique de la région de retenue (11) et contre la surface intérieure radialement périphérique du grand étage (7) de l'ouverture étagée (4).

2. Système de contact enfichable selon la revendication 1, **caractérisé en ce que** la gaine de câbles (16) est constituée d'une matière élastique.

3. Système de contact enfichable selon l'une des revendications précédentes, **caractérisé en ce que** la gaine de câbles (16) peut être reliée par complémentarité de formes à l'élément de connecteur (9).

4. Système de contact enfichable selon la revendication 3, **caractérisé en ce que** la région de retenue (11) de l'élément de connecteur (9) présente, au niveau de sa surface d'enveloppe radialement périphérique, une rainure de retenue (14) radialement périphérique, dans laquelle fait saillie une saillie annulaire (15), faisant saillie radialement vers l'intérieur, de la gaine de câbles (16).

5. Système de contact enfichable selon l'une des revendications précédentes, **caractérisé en ce que** la gaine de câbles (16) présente, au niveau de sa région faisant saillie dans le grand étage (7) de l'ouverture étagée (4), un bourrelet d'étanchéité (17) radialement périphérique, radialement saillant.

6. Système de contact enfichable selon l'une des revendications précédentes, **caractérisé en ce que** la région de retenue (11), faisant saillie dans le grand étage (7) de l'ouverture étagée (4), de l'élément de connecteur (9) présente un élargissement (12) de type collet, qui peut être appliqué axialement contre la surface annulaire (8) à la transition du petit étage (6) vers le grand étage (7) de l'ouverture étagée (4).

7. Système de contact enfichable selon l'une des revendications précédentes, **caractérisé en ce qu'**une saillie de blocage (13) de type crochet est disposée au niveau de la région d'extrémité, faisant saillie dans l'espace intérieur de boîtier (5), de la pièce formant tourillon (10) de l'élément de connecteur (9), laquelle saillie de blocage peut être repliée contre la surface d'enveloppe de la pièce formant tourillon (10) lors de l'introduction de la pièce formant tourillon (10) dans le petit étage (6) de l'ouverture étagée (4) et peut être rabattue élastiquement radialement vers l'extérieur dans la position d'installation de l'élément de connecteur (9) .

8. Système de contact enfichable selon l'une des revendications précédentes, **caractérisé en ce que** l'élément de liaison présente une section transversale qui diffère complètement ou partiellement d'une section transversale symétrique et l'ouverture étagée présente une section transversale qui diffère de manière correspondante complètement ou partiellement d'une section transversale symétrique.

9. Système de contact enfichable selon l'une des revendications précédentes, **caractérisé en ce que** l'ouverture étagée (4) s'étend dans une région angulaire entre 0° et 90° par rapport à l'axe longitudinal (3) du dispositif de réglage linéaire.

10. Système de contact enfichable selon l'une des revendications précédentes, **caractérisé en ce que** la fermeture d'extrémité (1) présente une pièce de raccordement (2).

11. Système de contact enfichable selon l'une des revendications précédentes, **caractérisé en ce que** le dispositif de réglage linéaire est un entraînement à broche, dont le moteur d'entraînement à broche est disposé dans l'espace intérieur de boîtier (5) et est en contact avec le câble (20).
